(19) **Europäisches Patentamt / European Patent Office / Office européen des brevets**

(11) **EP 3 988 402 A1**

(12) # EUROPEAN PATENT APPLICATION
published in accordance with Art. 153(4) EPC

(43) Date of publication:
**27.04.2022 Bulletin 2022/17**

(21) Application number: **20930656.2**

(22) Date of filing: **10.12.2020**

(51) International Patent Classification (IPC):
**B60R 25/20** $^{(2013.01)}$

(86) International application number:
**PCT/CN2020/135123**

(87) International publication number:
**WO 2022/041567 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2020 CN 202010889070**

(71) Applicants:
- **Guangzhou Chengxing Zhidong Motors Technology Co., Ltd.**
  **Guangzhou, Guangdong 510700 (CN)**

- **Guangzhou Xiaopeng Motors Technology Co., Ltd.**
  **Guangzhou, Guangdong 510630 (CN)**

(72) Inventor: **CHANG, Ziyao**
  **Guangzhou, Guangdong 510700 (CN)**

(74) Representative: **Yip, Matthew Wing Yu**
  **Maucher Jenkins**
  **Seventh Floor Offices**
  **Artillery House**
  **11-19 Artillery Row**
  **London SW1P 1RT (GB)**

(54) **CONTROL METHOD AND DEVICE**

(57) A control method and control apparatus are provided. The method is applicable to a vehicle having at least three Bluetooth modules. The method includes: acquiring signal strength information of a Bluetooth signal received by each of the Bluetooth modules, wherein the Bluetooth signal is a signal transmitted from a Bluetooth module of a first mobile terminal bonded to the vehicle; determining a distance between the first mobile terminal and the vehicle based on the signal strength information acquired by the Bluetooth modules; and controlling the vehicle to unlock or lock based on the distance between the first mobile terminal and the vehicle. This makes the unlocking/locking operations of the vehicle unnoticeable to users. No user operation is required and user experience can be improved.

Acquiring signal strength information of a Bluetooth signal received by each of multiple Bluetooth modules, wherein the Bluetooth signal is a signal transmitted from a Bluetooth module in a first mobile terminal bonded to the vehicle — 102

Determining a distance between the first mobile terminal and the vehicle based on the signal strength information acquired by the Bluetooth modules — 104

Controlling the vehicle to unlock or lock based on the distance between the first mobile terminal and the vehicle — 106

**FIG. 1**

## Description

### Field of Invention

The present invention relates to the field of automobile technology and, more particularly, to control methods, apparatuses and vehicles.

### Background

As automobile electronics technology continues to develop and user demands increase, vehicles offer more and more functions, such as remote unlocking/locking, navigation, entertainment, communications, etc. These have become important factors for users to evaluate additional values of vehicles.

Currently, there are various approaches for remote unlocking/locking, for example, unlocking/locking with physical keys, unlocking/locking with virtual keys, unlocking with NFC, and the like. These unlocking/locking approaches, however, have associated disadvantages.

(1) Remote unlocking/locking with physical keys. Unlocking/locking via a physical key requires a user to carry the physical key and press a physical button on the physical key in order to trigger the unlocking/locking, which is troublesome and intricate.

(2) Remote unlocking/locking with virtual keys. To trigger the unlocking/locking, a user has to first unlock the screen and start an APP (Application), and then click a related button in the APP. Apparently, such approach for unlocking/locking is also troublesome and intricate. In some circumstances, the unlocking/locking may not need to trigger the APP. However, the APP per se relies heavily on stability of the operating systems of mobile phones. Conventional operating systems of mobile phones may close applications or processes regularly at the operating system level by default (in order to maintain parallel availability of multiple processes or applications), which makes trigger of unlocking/locking by the virtual keys unreliable.

(3) Unlocking with NFC, for example with an NFC card/mobile phone with NFC capability. If an NFC card is utilized, the user must carry the NFC card. If a mobile phone with NFC capability is utilized, the mobile phone needs to be placed in a sensing area of the vehicle to unlock the door of the vehicle. This unlocking approach again is troublesome and intricate.

### Summary of Invention

An embodiment of the present invention provides a control method to control unlocking/locking of a vehicle without being noticed by users.

An embodiment of the present invention further provides a control device for implementing the aforementioned control method.

In order to address the problems mentioned above, the present invention discloses a control method, which is applicable to a vehicle having at least three Bluetooth modules. The method comprises: acquiring signal strength information of a Bluetooth signal received by each of the Bluetooth modules, wherein the Bluetooth signal is a signal transmitted from a Bluetooth module of a first mobile terminal bonded to the vehicle; determining a distance between the first mobile terminal and the vehicle based on the signal strength information acquired by the Bluetooth modules; and controlling the vehicle to unlock or lock based on the distance between the first mobile terminal and the vehicle.

Optionally, controlling the vehicle to unlock or lock based on the distance between the first mobile terminal and the vehicle, comprises: when it is determined that a user associated with the first mobile terminal is approaching the vehicle based on the distance between the first mobile terminal and the vehicle, controlling the vehicle to unlock if the distance is less than a preset first threshold; or when it is determined that the user associated with the first mobile terminal is moving away from the vehicle based on the distance between the first mobile terminal and the vehicle, controlling the vehicle to lock if the distance is greater than a preset second threshold.

Optionally, determining a distance between the first mobile terminal and the vehicle based on the signal strength information received by the Bluetooth modules, comprises: calculating a distance between the first mobile terminal and each Bluetooth module based on the signal strength information acquired by the Bluetooth module; and calculating the distance between the first mobile terminal and the vehicle based on the distances between the first mobile terminal and the Bluetooth modules.

Optionally, the method further comprises controlling the vehicle to shut down while the vehicle is controlled to unlock.

Optionally, the method further comprises: authenticating a user associated with the first mobile terminal, after controlling the vehicle to unlock and determining that the user has entered the vehicle; and controlling the vehicle to start when the authentication is successful.

Optionally, the vehicle comprises at least four Bluetooth modules, wherein one of the Bluetooth modules is a multimedia Bluetooth module and the at least three Bluetooth modules are low energy Bluetooth modules; and wherein the authentication of the user comprises: acquiring a first MAC address of a second mobile terminal connected to the multimedia Bluetooth module and a second MAC address of the first mobile terminal connected to the low energy Bluetooth module; determining whether the first MAC address is the same as the second MAC address; and determining that the authentication is successful if the first MAC address is the same as the second MAC address.

Optionally, the authentication of the user comprises: receiving password information input in a display device of the vehicle by the user; determining whether the password information matches preset password information; and determining that the authentication is successful if the password information matches the preset password information.

Optionally, the authentication of the user comprises: acquiring biometric information of the user; determining whether the biometric information matches preset biometric information; and determining that the authentication is successful if the biometric information matches the preset biometric information.

An embodiment of the present invention further discloses a control apparatus, which is applicable to a vehicle having at least three Bluetooth modules. The apparatus comprises: an acquisition module, configured to acquire signal strength information of a Bluetooth signal received by each of the Bluetooth modules, wherein the Bluetooth signal is a signal transmitted from a Bluetooth module of a first mobile terminal bonded to the vehicle; a distance determination module, configured to determine a distance between the first mobile terminal and the vehicle based on the signal strength information acquired by the Bluetooth modules; and a vehicle lock control module, configured to control the vehicle to unlock or lock based on the distance between the first mobile terminal and the vehicle.

Optionally, the vehicle lock control module comprises: an unlock control sub-module, configured to, when it is determined that a user associated with the first mobile terminal is approaching the vehicle based on the distance between the first mobile terminal and the vehicle, control the vehicle to unlock if the distance is less than a preset first threshold; and a lock control sub-module, configured to, when it is determined that the user associated with the first mobile terminal is moving away from the vehicle based on the distance between the first mobile terminal and the vehicle, control the vehicle to lock if the distance is greater than a preset second threshold.

Optionally, the distance determination module is configured to calculate a distance between the first mobile terminal and each Bluetooth module based on the signal strength information acquired by the Bluetooth module; and calculating the distance between the first mobile terminal and the vehicle based on the distances between the first mobile terminal and the Bluetooth modules.

Optionally, the apparatus further comprises: a shut-down control module, configured to control the vehicle to shut down while the vehicle is controlled to unlock.

Optionally, the apparatus further comprises: an authentication module, configured to authenticate a user associated with the first mobile terminal, after controlling the vehicle to unlock and determining that the user gets onto the vehicle; and an ignition control module, configured to control the vehicle to start when the authentication is successful.

Optionally, the vehicle comprises at least four Bluetooth modules, wherein one of the Bluetooth modules is a multimedia Bluetooth module and the at least three Bluetooth modules are low energy Bluetooth module. The authentication module comprises an address verification sub-module configured to: acquire a first MAC address of a second mobile terminal connected to the multimedia Bluetooth module and a second MAC address of the first mobile terminal connected to the low energy Bluetooth module; determine whether the first MAC address is the same as the second MAC address; and determine that the authentication is successful if the first MAC address is the same as the second MAC address.

Optionally, the authentication module comprises a password verification sub-module configured to: receive password information input in a display device of the vehicle by the user; determine whether the password information matches preset password information; and determine that the authentication is successful if the password information matches the preset password information.

Optionally, the authentication module comprises a feature verification sub-module configured to: acquire biometric information of the user; determine whether the biometric information matches preset biometric information; and determine that the authentication is successful if the biometric information matches the preset biometric information.

An embodiment of the present invention also provides a computer-readable storage medium comprising instructions which, when executed by a processor of an electronic device, cause the electronic device to carry out any one of the control methods as described according to the present invention.

Compared with the prior art, the embodiments of the present invention provide following advantages.

In the embodiments of the present invention, signal strength information of a Bluetooth signal transmitted from a Bluetooth module of a first mobile terminal bonded to the vehicle and received by at least three Bluetooth modules of a vehicle may be acquired; a distance between the first mobile terminal and the vehicle is then determined based on the signal strength information received by the Bluetooth modules; and the distance between the first mobile terminal and the vehicle is used to control unlocking or locking of the vehicle. No user operation is required. The unlocking/locking operations of the vehicle are unnoticeable to users. User experiences are thus improved.

**Brief Description of Drawings**

Fig. 1 is a flow chart of a control method according to an embodiment of the present invention;

Fig. 2 is a flow chart of a control method according to another embodiment of the present invention;

Fig. 3 is a flow chart of a control method according to a further embodiment of the present invention;

Fig. 4 is a block diagram illustrating the structure of a control apparatus according to an embodiment of the present invention; and

Fig. 5 is a block diagram illustrating the structure of a control apparatus according to another embodiment of the present invention.

**Detailed Description**

Objectives, features and advantages of the present invention will become apparent from the following detailed description when considered in conjunction with the drawings.

With the development of terminal technology, functions of mobile terminals are becoming more and more abundant. Users may use mobile terminals for communication, surfing the Internet, chatting, making payment, taking pictures, making appointments, etc., which makes mobile terminals become indispensable devices in people's daily lives. Most terminal devices are provided with Bluetooth modules, such that data exchange between mobile terminals and between a mobile terminal and other terminal devices can be quickly achieved via Bluetooth. For example, two mobile terminals may transfer multimedia data such as audio, video, and pictures to each other. For another example, a user may listen to audio media through a Bluetooth headset by connecting the Bluetooth headset with a mobile terminal. As automobile electronics technology continues to develop and user demands increase, more and more vehicles are provided with Bluetooth modules to facilitate data exchange between vehicles and between vehicles and mobile terminals. Based on this, an embodiment of the present invention provides a control method, which can implement control of vehicle unlocking and locking via a Bluetooth module in a mobile terminal and Bluetooth modules of the vehicle.

The control method provided by an embodiment of the present invention is applicable to a vehicle with at least three Bluetooth modules. A distance between a mobile terminal and the vehicle may be determined from signal strengths of signals received by the Bluetooth modules of the vehicle, wherein the signals are transmitted by a Bluetooth module of the mobile terminal. The vehicle may be controlled to unlock or lock based on the distance between the mobile terminal and the vehicle. Control of unlocking/locking of the vehicle is thus unnoticeable to users, and user experiences can be improved.

The at least three Bluetooth modules may be arranged at different positions on the vehicle depending on specific requirements of vehicle designs, which is not limiting for the invention described herein. The mobile terminal may be a mobile phone, a tablet computer, etc., which is not limiting for the invention described herein.

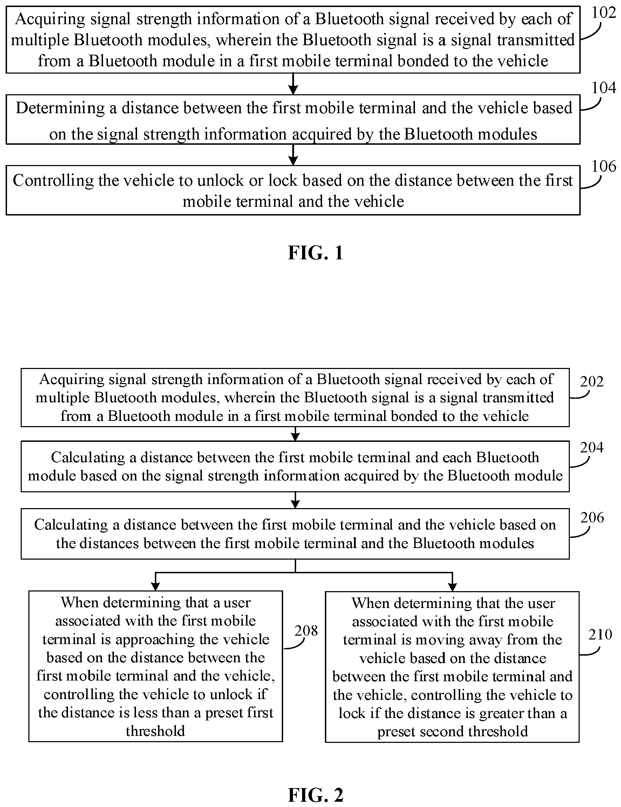

Referring to Fig. 1, a flow chart of a control method according to the present invention is illustrated.

At step 102, signal strength information of a Bluetooth signal received by each of the Bluetooth modules is acquired, wherein the Bluetooth signal is a signal transmitted from a Bluetooth module of a first mobile terminal bonded to the vehicle.

At step 104, the distance between the first mobile terminal and the vehicle is determined based on the signal strength information acquired by the Bluetooth modules.

In an embodiment of the present invention, a user may bond the Bluetooth module of his/her mobile terminal with the Bluetooth module(s) of his/her vehicle in advance. This is the initial authentication of the mobile terminal. Subsequently, unlocking/locking of the vehicle can be controlled by means of the Bluetooth module in the mobile terminal and the Bluetooth modules of the vehicle without authentication. This increases speed of the unlocking/locking operations of the vehicle.

The procedure of bonding the Bluetooth module of the mobile terminal with the Bluetooth module(s) of the vehicle will be illustrated later. For ease of illustration, the mobile terminal bonded to the vehicle may be referred to as a first mobile terminal.

When Bluetooth of the first mobile terminal is enabled, the Bluetooth module of the first mobile terminal can transmit Bluetooth signals. When the first mobile terminal is within a certain distance from the vehicle, each Bluetooth module of the vehicle may receive a Bluetooth signal transmitted by the Bluetooth module of the first mobile terminal, and can determine received signal strength information. The signal strength information is indicative of the strength of the received signal.

In an embodiment of the present invention, the signal strength information received by each of the Bluetooth modules may be acquired. A distance between the first mobile terminal and the vehicle, i.e., the distance between a user associated with the first mobile terminal and the vehicle, is then determined based on the signal strength information received by the Bluetooth modules.

At step 106, the vehicle is controlled to unlock or lock based on the distance between the first mobile terminal and the vehicle.

The distance between the first mobile terminal and the vehicle may be used to control unlocking or locking of a door of the vehicle. For example, when it is determined, based on the distance between the first mobile terminal and the vehicle, that the user associated with the first mobile terminal is approaching the vehicle, the door of the vehicle may be controlled to unlock. When it is determined, based on the distance between the first mobile terminal and the vehicle, that the user associated with the first mobile terminal is moving away from the vehicle, the door of the vehicle may be controlled to unlock. In the entire process, the user only needs to carry the mobile terminal with Bluetooth enabled, and does not need to trigger any function/application on the mobile terminal or to bring the mobile terminal close to a sensing area on the vehicle. This makes the control of unlocking/locking the vehicle unnoticeable to the user.

In summary, in the embodiment of the present invention, signal strength information of the Bluetooth signal transmitted from a Bluetooth module of a first mobile terminal bonded to the vehicle and received by at least three Bluetooth modules of a vehicle may be acquired. A distance between the first mobile terminal and the vehicle is then determined based on the signal strength information received by the Bluetooth modules, and the distance between the first mobile terminal and the vehicle is used to control unlocking or locking of the vehicle. This makes the unlocking/locking operations of the vehicle unnoticeable to the user. No user operation is required, and user experience is improved.

The procedure of bonding the Bluetooth of the first mobile terminal and the Bluetooth of the vehicle will now be described.

In an embodiment of the present invention, an option for bonding the Bluetooth of the first mobile terminal with the Bluetooth of the vehicle may be a bonding method with Numeric Comparison. During the bonding of the Bluetooth of the first mobile terminal and Bluetooth of the vehicle, the first mobile terminal and the vehicle may negotiate, and each generate and display a pairing code, such as a 6-digit number. The user may check whether the pairing code displayed by the first mobile terminal and the pairing code displayed by the vehicle match. If yes, the user may perform a confirmation operation on both the first mobile terminal and the vehicle and complete the bonding of the Bluetooth of the first mobile terminal with the Bluetooth of the vehicle. If no, the user may perform a rejection operation and initiate a new bonding process for the Bluetooth of the first mobile terminal and the Bluetooth of the vehicle.

In an embodiment of the present invention, another option for bonding the Bluetooth of the first mobile terminal with the Bluetooth of the vehicle is a bonding method with Passkey Entry (universal key). In an example, the user may input the same pairing code on the first mobile terminal and the vehicle. The first mobile terminal and the vehicle may then perform verification based on the pairing code and complete the bonding of the Bluetooth of the first mobile terminal with the Bluetooth of the vehicle after the verification is successful. In another example, the first mobile terminal (or the vehicle) may generate and display a random pairing code. The user may input the pairing code on the vehicle (or the first mobile terminal). The vehicle (or the first mobile terminal) may then transmit the input pairing code to the first mobile terminal (or the vehicle), and the first mobile terminal (or the vehicle) may verify the pairing code. After the verification is successful, the bonding of the Bluetooth of the first mobile terminal with the Bluetooth of the vehicle is completed.

Referring to Fig. 2, a flow chart of a control method according to an optional embodiment of the present invention is illustrated.

At step 202, signal strength information of a Bluetooth signal received by each of the Bluetooth modules is acquired, wherein the Bluetooth signal is a signal transmitted from a Bluetooth module of a first mobile terminal bonded to the vehicle.

In an embodiment of the present invention, the specific way of acquiring the signal strength information of the signal transmitted from the Bluetooth module of the first mobile terminal and received by the Bluetooth modules of the vehicle may vary depending on the version of the Bluetooth chip in the Bluetooth modules. The Bluetooth of a Bluetooth module having a Bluetooth chip of version v5.0 or above may acquire signal strength information of a received signal transmitted from the Bluetooth module of the first mobile terminal, without establishing a connection to the Bluetooth of the Bluetooth module of the first mobile terminal. The Bluetooth of a Bluetooth module having a Bluetooth chip of version v4.2 needs to be connected with the Bluetooth of the Bluetooth module of the first mobile terminal to acquire signal strength information of a received signal transmitted from the Bluetooth module of the first mobile terminal.

In an embodiment of the present invention, one of the at least three Bluetooth modules may be selected as a core Bluetooth module. The Bluetooth chip of the core Bluetooth module has a computing capability and can calculate the distance between the first mobile terminal and the vehicle. If all of the at least three Bluetooth modules of the vehicle are equipped with Bluetooth chips of v5.0 or above, the Bluetooth of the first mobile terminal may be bonded with only the Bluetooth of the core Bluetooth module in advance. If some of the at least three Bluetooth modules of the vehicle are equipped with Bluetooth chips of v5.0 or above, and the other ones are equipped with Bluetooth chips of v4.2, the Bluetooth of the Bluetooth module(s) having v4.2 Bluetooth chips may each be bonded with the Bluetooth of the first mobile terminal, and the Bluetooth of the core Bluetooth module may be bonded with the Bluetooth of the first mobile terminal in advance.

When the other Bluetooth module(s) acquires signal strength information of a signal or signals transmitted by the Bluetooth module of the first mobile terminal, they may send corresponding signal strength information to the core Bluetooth module. The core Bluetooth module can thus acquire the signal strength information associated with the other Bluetooth module(s). Then, the Bluetooth chip of the core Bluetooth module may perform steps 204-206 to determine the distance between the first mobile terminal and the vehicle.

The core Bluetooth module may serve as a master device, and the first mobile terminal may serve as a slave device. The core Bluetooth module actively searches for the Bluetooth of the first mobile terminal, and automatically connects to the Bluetooth of first mobile terminal when found.

At step 204, the distance between the first mobile terminal and each Bluetooth module of the vehicle is calculated based on the signal strength information received by the Bluetooth module.

At step 206, the distance between the first mobile terminal and the vehicle is calculated based on the distances between the first mobile terminal and the Bluetooth modules.

In an embodiment of the present invention, a three-point positioning method may be employed to calculate the distance between the first mobile terminal and the vehicle based on the signal strength information received by the Bluetooth modules.

With respect to the signal strength information received by each Bluetooth module, the distance between the first mobile terminal and the Bluetooth module may be calculated based on the signal strength information and an environmental fading factor. For example, the distance between the first mobile terminal and one of the Bluetooth modules may be calculated using the following formula:

$$d = 10^{\wedge}(\text{abs}(RSSI) - A) / (10 * n)$$

where *RSSI* denotes signal strength information of a signal transmitted from the Bluetooth module of the first mobile terminal and received by the above Bluetooth module; **A** denotes the signal strength while the first mobile terminal is spaced apart from the Bluetooth module by 1 meter; *n* is the environmental fading factor; and abs is an absolute value function.

Next, a circle is constructed with the position of each Bluetooth module as a center point and the distance between the Bluetooth module and the first mobile terminal as a radius. At least three circles are therefore constructed. The intersection or overlap area of the at least three circles is computed, and position information of the intersection or a point in the overlap area is determined as position information of the first mobile terminal. The distance between the first mobile terminal and the vehicle is then calculated based on the position information of the first mobile terminal and position information of the vehicle.

At step 208, when it is determined that the user associated with the first mobile terminal is approaching the vehicle, based on the distance between the first mobile terminal and the vehicle, the vehicle is controlled to unlock if the distance is less than a preset first threshold.

In an embodiment of the present invention, it may be determined whether the user associated with the first mobile terminal is approaching the vehicle or moving away from the vehicle based on two values of the distance between the first mobile terminal and the vehicle obtained from two consecutive calculations. If a currently calculated value of the distance between the first mobile terminal and the vehicle is less than a previously calculated value of the distance between the first mobile terminal and the vehicle, it means that the user associated with the first mobile terminal is approaching the vehicle, which indicates that the user needs to enter the vehicle. Under such circumstances, when the currently calculated value of the distance between the first mobile terminal and the vehicle is less than the preset first threshold, the vehicle will be controlled to unlock. The first threshold may be set depending on actual requirements. The present invention is not limited to any particular threshold value.

In an embodiment of the present invention, the Bluetooth chip of the core Bluetooth module may send an unlock command to a BCM (Body Control Module). The BCM may control a door of the vehicle to unlock after receiving the unlock command.

At step 210, when it is determined that the user associated with the first mobile terminal is moving away from the vehicle based on the distance between the first mobile terminal and the vehicle, the vehicle is controlled to lock if the distance is greater than a preset second threshold.

If the currently calculated value of the distance between the first mobile terminal and the vehicle is greater than the previously calculated value of the distance between the first mobile terminal and the vehicle, it means that the user associated with the first mobile terminal is moving away from the vehicle. Under such circumstances, when the currently calculated value of the distance between the first mobile terminal and the vehicle is greater than the preset second threshold, the vehicle will be controlled to lock. The second threshold may be set depending on actual requirements. The present invention is not limited to any particular threshold value. The first preset threshold may be equal to or different from the second preset threshold. The present invention is not limited in this respect.

In an embodiment of the present invention, the Bluetooth chip of the core Bluetooth module may send a lock command to the BCM. The BCM may control the door of the vehicle to lock after receiving the lock command.

In an optional embodiment of the present invention, the vehicle is controlled to shut down while it is controlled to unlock. This makes it possible to shut down the vehicle after the user gets off the vehicle, ensuring safety of the vehicle. To this end, the Bluetooth chip of the core Bluetooth module may send a shut-down command to a VCU (Vehicle Control Unit). The VCU will control the vehicle to shut down after receiving the shut-down command.

Of course, the foregoing steps may also be performed by other modules of the vehicle, such as a controller/processor. The present invention is not limited in this respect.

In summary, in an embodiment of the present invention, when it is determined that the user associated with the first mobile terminal is approaching the vehicle based on the distance between the first mobile terminal and the vehicle, the vehicle is controlled to unlock if the distance is less than the preset first threshold. Whether the user needs to unlock the vehicle is determined based on the distance between the user and the vehicle. The vehicle is controlled to unlock when it is determined that the user needs to unlock the vehicle and the user is close to the vehicle. In this manner, on the one hand, the vehicle can be unlocked without being noticed by the user, and on the other hand, risks of the vehicle being stolen due to early unlocking can be avoided.

In addition, in an embodiment of the present invention, when it is determined that the user associated with the first mobile terminal is moving away from the vehicle based on the distance between the first mobile terminal and the vehicle, the vehicle is controlled to lock if the distance is greater than the preset second threshold. Whether the user needs to lock the vehicle is determined based on the distance between the user and the vehicle. The vehicle is controlled to lock when it is determined that the user needs to lock the vehicle and the user is at a certain distance from the vehicle. Therefore, the vehicle can be locked without being noticed by the user, and repeatedly unlocking operations can be avoided when the user needs to re-enter the vehicle in a short period of time.

After the vehicle is controlled to unlock, the user usually opens the vehicle door to get in the vehicle and to start the vehicle. In an embodiment of the present invention, the user may be authenticated after getting in the vehicle. After successful authentication, the vehicle is controlled to start. This, on one hand, ensures safety of the vehicle, and on the other hand, improves user experiences by a more intelligent vehicle start process without user operation.

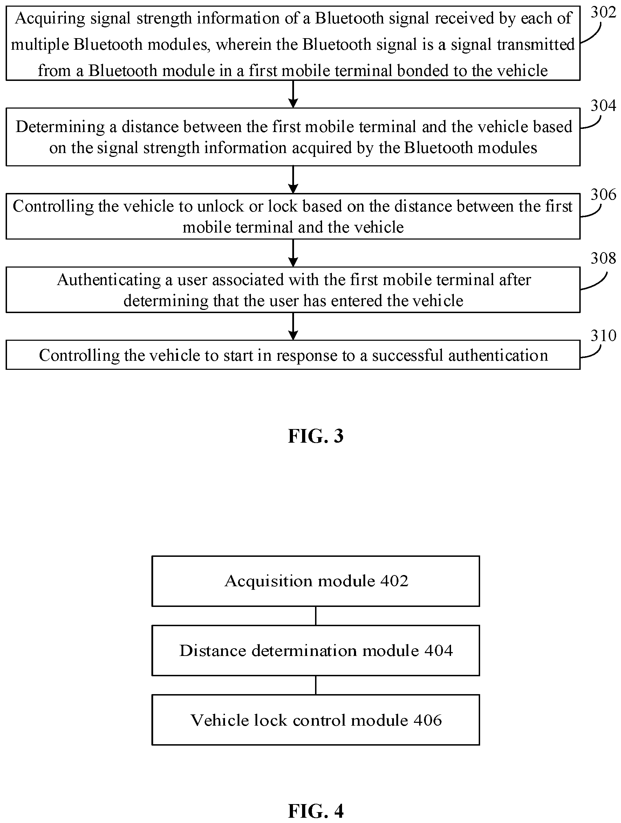

Referring to Fig. 3, a flow chart of a control method according to another embodiment of the present invention is illustrated.

At step 302, signal strength information of a Bluetooth signal received by each of the Bluetooth modules is acquired, wherein the Bluetooth signal is a signal transmitted from a Bluetooth module of a first mobile terminal bonded to the vehicle.

At step 304, the distance between the first mobile terminal and the vehicle is determined based on the signal strength information received by the Bluetooth modules.

At step 306, the vehicle is controlled to unlock based on the distance between the first mobile terminal and the vehicle.

Steps 302-306 are similar to the steps 202-208 described above and will not be repeated here.

At step 308, a user associated with the first mobile terminal is authenticated after it is determined that the user has entered the vehicle.

At step 310, the vehicle is controlled to start in response to successful authentication.

The determination as to whether the user has entered the vehicle may be made by detecting changes of the state of the vehicle door, changes of values output from a pressure sensor in the seat or the like. When it is determined that the user has entered the vehicle, authentication of the user may be performed. After successful authentication of the user, the vehicle is automatically controlled to start. This eliminates the need for the user to manually press a physical button to start the vehicle, thereby not only ensuring safety but also simplifying operations of the vehicle start process. The vehicle can thus be started in a more intelligent fashion, and user experiences can be improved.

The authentication of the user may be performed in various ways, examples of which are described below.

In an embodiment of the present invention, the vehicle may include at least four Bluetooth modules, one of which may be a multimedia Bluetooth module. The remaining at least three Bluetooth modules may be low energy Bluetooth modules. The at least three Bluetooth modules are the same as those described in the embodiments above. In the process of Bluetooth bonding between the Bluetooth of the first mobile terminal and the Bluetooth of the vehicle, the Bluetooth of the first mobile terminal may also be bonded with the Bluetooth of the multimedia Bluetooth module. Signal coverage areas of the at least three low energy Bluetooth modules are larger than the signal coverage area of the multimedia Bluetooth module. Thus, when a user carrying the first mobile terminal moves away from or approaches the vehicle, signal strength information of a Bluetooth signal transmitted from the Bluetooth module of the first mobile terminal and received by the low energy Bluetooth modules is acquired. When the user carrying the first mobile terminal approaches the vehicle, the Bluetooth of a core low energy Bluetooth module of the vehicle is first connected to the Bluetooth of the first mobile terminal. When the first mobile terminal is at a certain distance from the vehicle, the Bluetooth of the multimedia Bluetooth module is then connected to the Bluetooth of the first mobile terminal. With respect to the multimedia Bluetooth module, the first mobile terminal may serve as a master device, and the multimedia Bluetooth module may serve as a slave device.

A method of authenticating the user may comprise the following sub-steps.

At sub-step S22, a first MAC address of a second mobile terminal connected to the multimedia Bluetooth module and a second MAC address of the first mobile terminal connected to the low energy Bluetooth module are acquired.

At sub-step S24, determination is performed as to whether the first MAC address is the same as the second MAC address.

At sub-step S26, it is determined that the authentication is successful if the first MAC address is the same as the second MAC address.

In the embodiment of the present invention, it may be determined whether the user getting in the vehicle is the same as the user associated with the first mobile terminal bonded to the vehicle, by determining whether the mobile terminal connected to the multimedia Bluetooth module of the vehicle is the same as the first mobile terminal connected to the core low energy Bluetooth module of the vehicle. For ease of illustration, the mobile terminal connected to the multimedia Bluetooth module may be referred to as the second mobile terminal.

The MAC address (Media Access Control Address) of the first mobile terminal may be acquired after the core low energy Bluetooth module is connected to the first mobile terminal, and the MAC address of the second mobile terminal may be acquired after the multimedia Bluetooth module is connected to the second mobile terminal. The multimedia Bluetooth module may send the acquired first MAC address of the second mobile terminal to the core low energy Bluetooth module. The core low energy Bluetooth module then determines whether the first MAC address is the same as the second MAC address.

If the core low energy Bluetooth module determines that the first MAC address is the same as the second MAC address, that means the first mobile terminal and the second mobile terminal are the same mobile terminal. In other words, it can be determined that the user entering the vehicle is the same user as the user associated with the first mobile terminal bonded to the vehicle. At this point, it can be determined that the user authentication is successful. When it is determined that the authentication is successful, the Bluetooth chip of the core Bluetooth module may send a vehicle start command to the VCU. The VCU may control the vehicle to start after receiving the vehicle start command.

If the core low energy Bluetooth module determines that the first MAC address is different from the second MAC address, that means the first mobile terminal and the second mobile terminal are different mobile terminals. In other words, the user entering the vehicle and the user associated with the first mobile terminal bonded to the vehicle are different users. At this point, it can be determined that the authentication has failed, and the vehicle will not be controlled to start.

Of course, the foregoing sub-steps S22-S26 can also be performed by other modules of the vehicle, such as a processor/controller. The present invention is not limited in this respect.

The authentication of the user can be quickly implemented by performing the sub-steps S22-S26.

Another method of user authentication may comprise the following sub-steps:

> sub-step S42, receiving password information input in a display device of the vehicle by the user;
> sub-step S44, determining whether the password information matches preset password information; and
> sub-step S46, determining that the authentication is successful if the password information matches the preset password information.

In an embodiment of the present invention, after detecting that the user has entered the vehicle, the vehicle may be controlled to power on and a password input interface may be displayed on a display device of the vehicle. The display device displaying the password input interface may be a central control panel of the vehicle.

After the user inputs a password in the display device, the password information input by the user may be acquired and then compared with preset password information to determine whether the password information matches the preset password information. The preset password information may refer to password information that can be used for starting the vehicle, and may be set by the user in advance. The password information may be gesture password information or text password information. The present invention is not limited in this respect.

Of course, the foregoing sub-steps S42-S46 may be performed by a processor/controller of the vehicle. The authentication may be determined to be successful when the password information matches the preset password information. A vehicle start command can then be sent to the VCU. The VCU may control the vehicle to start after receiving the vehicle start command. It may be determined that the authentication has failed when the password information matches the preset password information, and the vehicle will not be controlled to start.

Another method of user authentication may comprise the following sub-steps:

> sub-step S42, acquiring biometric information of the user;
> sub-step S44, determining whether the biometric information matches preset biometric information; and
> sub-step S46, determining that the authentication is successful if the biometric information matches the preset biometric information.

In an embodiment of the present invention, a biometric information acquisition device, such as an image acquisition device (e.g., a camera), is installed in the vehicle. The biometric information acquisition device may be installed at different positions in the vehicle, for example, on the steering wheel or the inner side of the A-pillar. Biometric information of the user may be acquired by the biometric information acquisition device of the vehicle. The biometric information of the user acquired by the biometric information acquisition device may be collected and compared with preset biometric information to determine whether the biometric information matches the preset biometric information.

The preset biometric information may refer to information that can be used for starting the vehicle, and may be set by the user in advance. The biometric information may include a variety of information, such as facial features, iris features, etc. The present invention is not limited in this respect.

Of course, the foregoing sub-steps S42-S46 may be performed by a processor/controller of the vehicle. When the biometric information matches the preset biometric information, the authentication may be determined to be successful. At this point, a vehicle start command may be sent to the VCU. The VCU may control the vehicle to start after receiving the vehicle start command. It may be determined that the authentication has failed when the biometric information does not match the preset biometric information, and the vehicle will not be controlled to start.

In summary, in the embodiment of the present invention, after the vehicle is controlled to unlock and it is determined that a user associated with the first mobile terminal has entered the vehicle, identity authentication is performed against the user. When the authentication is successful, the vehicle is controlled to start. This, on the one hand, ensures safety of the vehicle, and on the other hand, avoids the need for user operation. A more intelligent vehicle start process can therefore be implemented, and user experience can be improved.

It should be noted that, although embodiments of the methods are described as series of acts for convenience of illustration, it will be appreciated by those skilled in the art that the present invention is not limited by the ordering of acts in the embodiments, as some steps may be performed in different orders or concurrently with other steps. In addition, those skilled in the art will also appreciate that the embodiments described herein are preferred embodiments, and not all illustrated acts are required to implement the present invention.

Referring to Fig. 4, a block diagram of the structure of a control apparatus according to an embodiment of the present invention is illustrated. The apparatus may comprise following modules:

an acquisition module 402, configured to acquire signal strength information of a Bluetooth signal received by each of the Bluetooth modules, wherein the Bluetooth signal is a signal transmitted from a Bluetooth module of a first mobile terminal bonded to the vehicle;
a distance determination module 404, configured to determine a distance between the first mobile terminal and the vehicle based on the signal strength information acquired by the Bluetooth modules; and
a vehicle lock control module 406, configured to control the vehicle to unlock or lock based on the distance between the first mobile terminal and the vehicle.

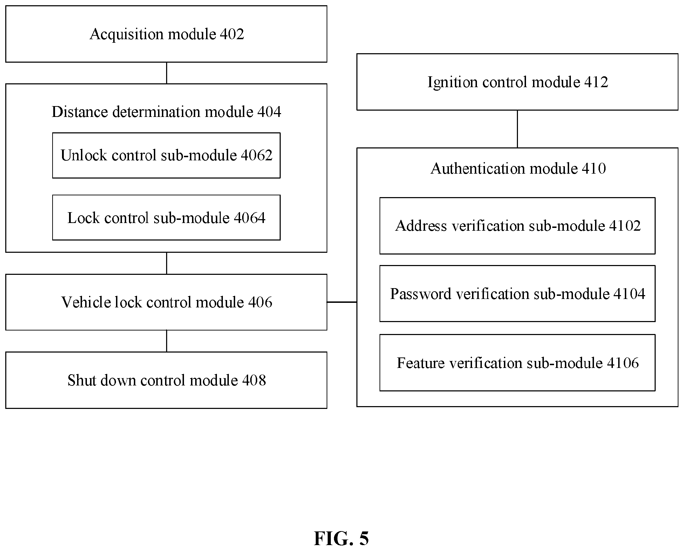

Referring to Fig. 5, a block diagram of the structure of a control apparatus according to an optional embodiment of the present invention is illustrated.

In an optional embodiment of the present invention, the vehicle lock control module 406 comprises:

an unlock control sub-module 4062 configured to, when it is determined that a user associated with the first mobile terminal is approaching the vehicle based on the distance between the first mobile terminal and the vehicle, control the vehicle to unlock if the distance is less than a preset first threshold; and
a lock control sub-module 4064 configured to, when it is determined that the user associated with the first mobile terminal is moving away from the vehicle based on the distance between the first mobile terminal and the vehicle, control the vehicle to lock if the distance is greater than a preset second threshold.

In an optional embodiment of the present invention, the distance determination module 404 is configured to calculate a distance between the first mobile terminal and each Bluetooth module based on the signal strength information acquired by the Bluetooth module; and calculating the distance between the first mobile terminal and the vehicle based on the distances between the first mobile terminal and the Bluetooth modules.

In an optional embodiment of the present invention, the apparatus further comprises:
a shut-down control module 408 configured to control the vehicle to shut down while the vehicle is controlled to unlock.

In an optional embodiment of the present invention, the apparatus further comprises:

an authentication module 410 configured to authenticate a user associated with the first mobile terminal, after controlling the vehicle to unlock and determining that the user has entered the vehicle; and
an ignition control module 412 configured to control the vehicle to start when the authentication is successful.

In an optional embodiment of the present invention, the vehicle comprises at least four Bluetooth modules, wherein one of the Bluetooth modules is a multimedia Bluetooth module and the other at least three Bluetooth modules are low energy Bluetooth modules.

The authentication module 410 comprises an address verification sub-module 4102 configured to:

acquire a first MAC address of a second mobile terminal connected to the multimedia Bluetooth module and a second MAC address of the first mobile terminal connected to the low energy Bluetooth module;
determine whether the first MAC address is the same as the second MAC address; and
determine that the authentication is successful if the first MAC address is the same as the second MAC address.

In an optional embodiment of the present invention, the authentication module 410 comprises a password verification sub-module 4104 configured to:

receive password information input in a display device of the vehicle by the user;
determine whether the password information matches preset password information; and
determine that the authentication is successful if the password information matches the preset password information.

In an optional embodiment of the present invention, the authentication module 410 comprises a feature verification sub-module 4106 configured to:

acquire biometric information of the user;
determine whether the biometric information matches preset biometric information; and
determine that the authentication is successful if the biometric information matches the preset biometric information.

In summary, in the embodiments of the present invention, signal strength information of a Bluetooth signal received by each of three Bluetooth modules of a vehicle may be acquired, wherein the Bluetooth signal is transmitted from a Bluetooth module of a first mobile terminal bonded to the vehicle. A distance between the first mobile terminal and the vehicle is then determined based on the signal strength information acquired by the Bluetooth modules, and the distance between the first mobile terminal and the vehicle is used to control unlocking or locking of the vehicle. This makes the unlocking/locking operations of the vehicle unnoticeable to the user. No user operation is required, and user experience is improved.

For the apparatus embodiments, since they are substantially similar to the method embodiments, the description is simplified in the light of the method embodiments described herein.

An embodiment of the present invention further provides a computer-readable storage medium comprising instructions which, when executed by a processor of an electronic device, cause the electronic device to carry out any one of the control methods as described according to the present invention.

The embodiments illustrated herein have been described in an iterative manner. The description of each embodiment focuses on differences from other embodiments, and functioning of same or similar parts may be understood by reference to each other.

As will be appreciated by persons skilled in the art, embodiments of the present invention may be provided as methods, apparatuses, or computer program products. Accordingly, embodiments of the present invention may be implemented as hardware embodiments, software embodiments, or combinations of software and hardware embodiments. Moreover, embodiments of the present invention may be implemented as computer program products embodied on one or more computer usable storage media (including, but not limited to, magnetic disk storage, CD-ROM, optical storage, etc.) having computer usable program codes stored thereon.

The embodiments of the present invention are described with reference to the flow charts and/or block diagrams of methods, terminal devices (systems), and computer program products according to embodiments of the present invention. It will be appreciated that each flow and/or block of the flow charts and/or block diagrams and any combinations thereof can be implemented by computer program instructions. These computer program instructions may be provided to a processor of generic purpose computers, special purpose computers, embedded processing machines, or other programmable data processing devices, to generate a machine, such that the instructions, executed by the processors of the computers or the other programmable data processing devices, create means for implementing functions specified in a flow or flows of the flow charts and/or a block or blocks of the block diagrams.

These computer program instructions may also be stored in a computer-readable storage that can direct a computer or other programmable data processing device to function in a particular manner, such that the instructions stored on the computer-readable storage produce an article of manufacture including instruction means for implementing functions specified in a flow or flows of the flow charts and/or a block or blocks of the block diagrams.

These computer program instructions may also be loaded onto computers or other programmable data processing devices to cause a series of operation steps to be performed on the computers or the other programmable devices to produce a computer implemented process, such that the instructions executed on the computers or the other programmable devices perform steps for implementing functions specified in a flow or flows of the flow charts and/or a block or blocks of the block diagrams.

While preferred embodiments of the present invention have been described, other alterations and modifications to those embodiments may be made by those skilled in the art once the basic inventive concept is recognized. It is therefore intended that the appended claims are intended to be interpreted to cover the preferred embodiments and all alterations and modifications that fall within the scope of embodiments of the present invention.

Finally, it should also be noted that relational terms such as the first and the second, and the like herein are used solely to distinguish one entity or operation from another entity or operation, without necessarily requiring or implying any actual relations or ordering between such entities or operations. Moreover, the terms "comprise," "include," or any variation thereof, are intended to cover relevant elements non-exclusively, such that processes, methods, articles, or terminal devices that comprise a series of elements include not only those elements but also other elements not expressly listed but inherent to such processes, methods, articles, or terminal devices. An element limited by the phrase "comprising a/an" does not preclude existence of additional identical elements in a process, method, article, or terminal device that comprises the element.

While the present invention has been described in detail with respect to a control method and a control apparatus, specific examples have been described herein to illustrate the principles and embodiments of the invention, the description of which is provided solely to aid in the understanding of the principles of the invention and its core concept. At the same time, it will be apparent to those skilled in the art from this disclosure that various changes may be made in the specific embodiments and applications, and that the present specification should not be construed as limiting the invention.

**Claims**

1. A control method, applicable to a vehicle having at least three Bluetooth modules, the method comprising:

   acquiring signal strength information of a Bluetooth signal received by each of the Bluetooth modules, wherein the Bluetooth signal is a signal transmitted from a Bluetooth module of a first mobile terminal bonded to the vehicle;
   determining a distance between the first mobile terminal and the vehicle based on the signal strength information acquired by each of the Bluetooth modules; and
   controlling the vehicle to unlock or lock based on the distance between the first mobile terminal and the vehicle.

2. The method of claim 1, wherein said controlling the vehicle to unlock or lock based on the distance between the first mobile terminal and the vehicle comprises:

   when it is determined that a user associated with the first mobile terminal is approaching the vehicle based on the distance between the first mobile terminal and the vehicle, controlling the vehicle to unlock if the distance is less than a preset first threshold; and
   when it is determined that the user associated with the first mobile terminal is moving away from the vehicle based on the distance between the first mobile terminal and the vehicle, controlling the vehicle to lock if the distance is greater than a preset second threshold.

3. The method of claim 1, wherein said determining a distance between the first mobile terminal and the vehicle based on the signal strength information acquired by each of the Bluetooth modules comprises:

   calculating a distance between the first mobile terminal and each Bluetooth module based on the signal strength information acquired by the Bluetooth module; and
   calculating the distance between the first mobile terminal and the vehicle based on the distances between the first mobile terminal and the Bluetooth modules.

4. The method of claim 1, further comprising:
   controlling the vehicle to shut down while the vehicle is controlled to unlock.

5. The method of claim 1, further comprising:

   authenticating a user associated with the first mobile terminal, after controlling the vehicle to unlock and determining that the user has entered the vehicle; and
   controlling the vehicle to start when the authentication is successful.

6. The method of claim 5, wherein the vehicle comprises at least four Bluetooth modules, wherein one of the Bluetooth modules is a multimedia Bluetooth module and the at least three Bluetooth modules are low energy Bluetooth modules, and wherein the authentication of the user comprises:

   acquiring a first MAC address of a second mobile terminal connected to the multimedia Bluetooth module and a second MAC address of the first mobile terminal connected to the low energy Bluetooth module;
   determining whether the first MAC address is the same as the second MAC address; and
   determining that the authentication is successful if the first MAC address is the same as the second MAC address.

7. The method of claim 5, wherein the authentication of the user comprises:

   receiving password information input in a display device of the vehicle by the user;
   determining whether the password information matches preset password information; and
   determining that the authentication is successful if the password information matches the preset password information.

8. The method of claim 5, wherein the authentication of the user comprises:

   acquiring biometric information of the user;
   determining whether the biometric information matches preset biometric information; and
   determining that the authentication is successful if the biometric information matches the preset biometric information.

9. A control apparatus, applicable to a vehicle having at least three Bluetooth modules, comprising:

an acquisition module, configured to acquire signal strength information of a Bluetooth signal received by each of the Bluetooth modules, wherein the Bluetooth signal is a signal transmitted from a Bluetooth module of a first mobile terminal bonded to the vehicle;

a distance determination module, configured to determine a distance between the first mobile terminal and the vehicle based on the signal strength information acquired by the Bluetooth modules; and

a vehicle lock control module, configured to control the vehicle to unlock or lock based on the distance between the first mobile terminal and the vehicle.

10. A computer-readable storage medium having instruction code stored thereon which, when executed by a processor of an electronic device, causes the electronic device to perform the control method of any one of claims 1-8.

| Acquiring signal strength information of a Bluetooth signal received by each of multiple Bluetooth modules, wherein the Bluetooth signal is a signal transmitted from a Bluetooth module in a first mobile terminal bonded to the vehicle | 102 |
|---|---|

↓

| Determining a distance between the first mobile terminal and the vehicle based on the signal strength information acquired by the Bluetooth modules | 104 |
|---|---|

↓

| Controlling the vehicle to unlock or lock based on the distance between the first mobile terminal and the vehicle | 106 |
|---|---|

**FIG. 1**

| Acquiring signal strength information of a Bluetooth signal received by each of multiple Bluetooth modules, wherein the Bluetooth signal is a signal transmitted from a Bluetooth module in a first mobile terminal bonded to the vehicle | 202 |
|---|---|

↓

| Calculating a distance between the first mobile terminal and each Bluetooth module based on the signal strength information acquired by the Bluetooth module | 204 |
|---|---|

↓

| Calculating a distance between the first mobile terminal and the vehicle based on the distances between the first mobile terminal and the Bluetooth modules | 206 |
|---|---|

| When determining that a user associated with the first mobile terminal is approaching the vehicle based on the distance between the first mobile terminal and the vehicle, controlling the vehicle to unlock if the distance is less than a preset first threshold | 208 | When determining that the user associated with the first mobile terminal is moving away from the vehicle based on the distance between the first mobile terminal and the vehicle, controlling the vehicle to lock if the distance is greater than a preset second threshold | 210 |
|---|---|---|---|

**FIG. 2**

Acquiring signal strength information of a Bluetooth signal received by each of multiple Bluetooth modules, wherein the Bluetooth signal is a signal transmitted from a Bluetooth module in a first mobile terminal bonded to the vehicle

302

Determining a distance between the first mobile terminal and the vehicle based on the signal strength information acquired by the Bluetooth modules

304

Controlling the vehicle to unlock or lock based on the distance between the first mobile terminal and the vehicle

306

Authenticating a user associated with the first mobile terminal after determining that the user has entered the vehicle

308

Controlling the vehicle to start in response to a successful authentication

310

**FIG. 3**

Acquisition module 402

Distance determination module 404

Vehicle lock control module 406

**FIG. 4**

Acquisition module 402

Distance determination module 404

Unlock control sub-module 4062

Lock control sub-module 4064

Vehicle lock control module 406

Shut down control module 408

Ignition control module 412

Authentication module 410

Address verification sub-module 4102

Password verification sub-module 4104

Feature verification sub-module 4106

**FIG. 5**

TRANSLATION

## INTERNATIONAL SEARCH REPORT

| International application No. |
|---|
| **PCT/CN2020/135123** |

**A.    CLASSIFICATION OF SUBJECT MATTER**

B60R 25/20(2013.01)i

According to International Patent Classification (IPC) or to both national classification and IPC

**B.    FIELDS SEARCHED**

Minimum documentation searched (classification system followed by classification symbols)

B60R

Documentation searched other than minimum documentation to the extent that such documents are included in the fields searched

Electronic data base consulted during the international search (name of data base and, where practicable, search terms used)

CNPAT, EPODOC, WPI, CNKI: 程紫尧, 控制, 方法, 车辆, 蓝牙, 模块, 距离, 解锁, 强度, 身份, 验证, 信号, Control, method, vehicle, bluetooth, module, distance, unlocking, strength, identity, verification, signal

**C.    DOCUMENTS CONSIDERED TO BE RELEVANT**

| Category* | Citation of document, with indication, where appropriate, of the relevant passages | Relevant to claim No. |
|---|---|---|
| X | CN 110606046 A (SHENZHEN SHENGRUN TECH CO., LTD.) 24 December 2019 (2019-12-24) description, paragraphs 5-29 | 1-10 |
| X | CN 206406889 U (DONGGUAN YDT ELECTRONIC TECHNOLOGY CO., LTD.) 15 August 2017 (2017-08-15) description, paragraphs 36 and 37 | 1-10 |
| PX | CN 111976649 A (GUANGZHOU XIAOPENG MOTORS TECHNOLOGY COMPANY LTD.) 24 November 2020 (2020-11-24) description, paragraphs 9-25 | 1-10 |
| A | CN 206264987 U (BEIJING YIXIONG INFO TECH CO., LTD.) 20 June 2017 (2017-06-20) entire document | 1-10 |
| A | CN 105346502 A (KOSTAL (SHANGHAI) MANAGEMENT CO., LTD.; SHANGHAI KOSTAL-HUAYANG AUTO ELECTRIC CO., LTD.) 24 February 2016 (2016-02-24) entire document | 1-10 |
| A | CN 104509143 A (CERTIS CISCO SECURITY PTE LTD.) 08 April 2015 (2015-04-08) entire document | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2021** | **02 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

TRANSLATION

**INTERNATIONAL SEARCH REPORT**

International application No.

**PCT/CN2020/135123**

**C. DOCUMENTS CONSIDERED TO BE RELEVANT**

| Category* | Citation of document, with indication, where appropriate, of the relevant passages | Relevant to claim No. |
|---|---|---|
| A | CN 107650862 A (WUHAN UNIVERSITY) 02 February 2018 (2018-02-02) entire document | 1-10 |
| A | WO 2018127407 A1 (JAGUAR LAND ROVER LIMITED) 12 July 2018 (2018-07-12) entire document | 1-10 |

Form PCT/ISA/210 (second sheet) (January 2015)

**TRANSLATION**

### INTERNATIONAL SEARCH REPORT
### Information on patent family members

International application No.

**PCT/CN2020/135123**

| Patent document cited in search report | | | Publication date (day/month/year) | Patent family member(s) | | | Publication date (day/month/year) |
|---|---|---|---|---|---|---|---|
| CN | 110606046 | A | 24 December 2019 | WO | 2021027347 | A1 | 18 February 2021 |
| CN | 206406889 | U | 15 August 2017 | | None | | |
| CN | 111976649 | A | 24 November 2020 | | None | | |
| CN | 206264987 | U | 20 June 2017 | | None | | |
| CN | 105346502 | A | 24 February 2016 | | None | | |
| CN | 104509143 | A | 08 April 2015 | HK | 1198677 | A1 | 22 May 2015 |
| | | | | WO | 2013191648 | A1 | 27 December 2013 |
| | | | | GB | 2514055 | B | 11 July 2018 |
| | | | | GB | 2514055 | A | 12 November 2014 |
| | | | | JP | 5899380 | B2 | 06 April 2016 |
| | | | | US | 2015147970 | A1 | 28 May 2015 |
| | | | | US | 2017006416 | A1 | 05 January 2017 |
| | | | | US | 9609677 | B2 | 28 March 2017 |
| | | | | GB | 201414908 | D0 | 08 October 2014 |
| | | | | JP | 2015531181 | A | 29 October 2015 |
| | | | | US | 9848288 | B2 | 19 December 2017 |
| CN | 107650862 | A | 02 February 2018 | | None | | |
| WO | 2018127407 | A1 | 12 July 2018 | GB | 2558589 | A | 18 July 2018 |
| | | | | GB | 201700298 | D0 | 22 February 2017 |

Form PCT/ISA/210 (patent family annex) (January 2015)